# EUROPÄISCHE PATENTSCHRIFT

(11) **EP 3 386 737 B1**
(45) Veröffentlichungstag und Bekanntmachung des Hinweises auf die Patenterteilung: **25.09.2019**
(21) Anmeldenummer: 16825341.7
(22) Anmeldetag: 12.12.2016
(51) Int. Cl.: B29C 70/40, B29C 70/08, B29C 70/88, B32B 15/092, B32B 15/14

(54) **VERFAHREN ZUR HERSTELLUNG EINES HALBZEUGS ODER BAUTEILS AUS METALL UND FASERVERBUND**
METHOD FOR PRODUCING A SEMI-FINISHED PART OR COMPONENT FROM METAL AND COMPOSITE
PROCEDE DE FABRICATION D'UN SEMI-PRODUIT OU COMPOSANT EN METAL ET COMPOSITE

(30) Priorität: 11.12.2015 EP 15199680
(43) Veröffentlichungstag der Anmeldung: 17.10.2018
(73) Patentinhaber: voestalpine Stahl GmbH, 4020 Linz (AT); voestalpine Metal Forming GmbH, 3500 Krems an der Donau (AT)
(72) Erfinder: EYSSELL, Carola, 4225 Luftenberg (AT); HEINRITZ, Rüdiger, 73527 Schwäbisch Gmünd (DE); KELSCH, Reiner, 73557 Mutlangen (DE); MAYRHOFER, Gerhard, 4121 Altenfelden (AT); ROUET, Christian, 3494 Gedersdorf (AT); RIEGLER, Johannes, 4611 Buchkirchen (AT)
(74) Vertreter: Jell, Friedrich
(86) Internationale Anmeldenummer: PCT/EP2016/080706
(87) Internationale Veröffentlichungsnummer: WO 2017/098061

(56) Entgegenhaltungen:
- EP-A1- 2 647 486
- EP-A1- 2 859 967
- DE-A1-102014 001 132
- N.N.: "Lieferprogramm Spaltband", , 21. April 2009 (2009-04-21), XP055361768, Düsseldorf Gefunden im Internet: URL:http://www.salzgitter-mannesmann-hande l.de/service/_doc/broschueren/lp_spaltband _smsd.pdf [gefunden am 2017-04-04]
- M ; Wacker ET AL: "Sonderdrucke Härtung von Reaktionsharzen Time-Temperature-Transition-Diagramm", , 18. Juli 2013 (2013-07-18), XP055276610, Erlangen Gefunden im Internet: URL:http://www.lkt.uni-erlangen.de/publika tionen/online-aufsaetze/ttt.pdf [gefunden am 2016-05-31]

## Beschreibung

Die Erfindung betrifft ein Verfahren zur Herstellung eines Halbzeugs oder Bauteils gemäss Anspruch 1, bei dem ein als Spaltband ausgebildeter Metallträger mit mindestens einem Prepreg, aufweisend eine thermisch vernetzbare, duroplastische Matrix mit Endlosfasern, belegt, die duroplastische Matrix des Prepregs durch Erwärmen vorvernetzt und der mit dem vorvernetzten Prepreg belegte Metallträger zu einem Halbzeug oder Bauteil durch Rollprofilieren umgeformt wird.

Aus dem Stand der Technik sind beispielsweise die DE 102014 001132 A1, die EP 2647486 A1 sowie die EP 2859967 A1 bekannt.

Um einen Metallträger, nämlich einen Blechzuschnitt bzw. eine Blechplatine, verstärkt mit Prepregs, die eine duroplastische Matrix mit Endlosfasern aufweisen, möglichst beschädigungsfrei einem Umformverfahren, insbesondere Tiefziehen, unterwerfen zu können, ist es aus dem Stand der Technik bekannt (WO2013/153229A1), die plastischen Verformungen am Metallträger in die beschichtungsfreien Bereiche des Metallträgers zu verlagern. Demnach bestehen beschichtungsfreie Bereiche am Halbzeug oder Bauteil, was solche FVK-verstärkten Halbzeuge bzw. Bauteile hinsichtlich ihres Leichtbaupotentials und damit ihrer Anwendungsmöglichkeiten einschränkt. Hinzu kommt, dass durch diese Flächenbeschränkung auch die Faserlänge der Prepregs eingeschränkt wird, was zu reduzierter Steifigkeit und Festigkeit führen kann. Zudem zeigte sich bei Halbzeugen oder Bauteilen, die aus Blechzuschnitten mit drucklos bis zur Blockfestigkeit ausgehärteten Prepregs tiefgezogen wurden, die Tendenz zur Delamination und/oder zu einer erhöhten Porosität im endvernetzten Faserverbundmaterial - was unter anderem die Reproduzierbarkeit des Verfahrens beeinträchtigt.

### Darstellung der Erfindung

Die Erfindung hat sich daher die Aufgabe gestellt, ein Verfahren der eingangs geschilderten Art hinsichtlich seiner Einfachheit, Anwendungsmöglichkeiten und auch in seiner Reproduzierbarkeit zu verbessern. Zudem soll ein Verfahren mit geringer Zykluszeit ermöglicht werden.

Die Erfindung löst die gestellte Aufgabe dadurch, dass beim Vorvernetzen der duroplastischen Matrix des Prepregs dessen Matrix in einen ihrem Viskositätsminimum nachfolgenden Viskositätszustand übergeführt und noch vor Erreichen ihres Gelierpunkts das Prepreg gemeinsam mit dem Metallträger umgeformt wird.

Wird beim Vorvernetzen der duroplastischen Matrix des Prepregs dessen Matrix in einen ihrem Viskositätsminimum nachfolgenden Viskositätszustand übergeführt und noch vor Erreichen ihres Gelierpunkts das Prepreg gemeinsam mit dem Metallträger umgeformt wird, kann dadurch nicht nur eine plastische Formänderung am Metallträger in dessen faserverstärkten Bereichen zugelassen, sondern auch die Reproduzierbarkeit des Verfahrens deutlich verbessert werden. Das sich in diesem Zustand befindliche Prepreg kann nämlich den Umformradien entsprechende, relative Bewegungen zwischen seinen Endlosfasen und dem Metallträger zulassen. Somit kann selbst engen Biegeradien am Blechzuschnitt gefolgt werden, ohne mit einem Bruch oder einer Delamination rechnen zu müssen. Das erfindungsgemäße Verfahren ist daher besonders vielseitig anwendbar. Überraschend konnte zudem erreicht werden, dass durch das gemeinsame Umformen das Kompaktieren des Matrixmaterials mit der Faserstruktur der Endlosfasern erheblich verbessert werden kann. Die vergleichsweise kurze Kraftbeaufschlagung, insbesondere Druckbeaufschlagung, beim Umformen kann genutzt werden, die Porosität im Faserverbund zu verringern - womit die Laminatqualität erhöhbar und die Gefahr einer Delamination der Faserverstärkung am Blechzuschnitt weiter reduzierbar ist. Erfindungsgemäß kann daher durch das Überführen der Matrix in einen ihrem Viskositätsminimum nachfolgenden Viskositätszustand und dem Umformen des Prepregs gemeinsam mit dem Metallträger noch vor Erreichen des Gelierpunkts der Matrix die Reproduzierbarkeit des Verfahren erheblich verbessert werden. Zudem ist es möglich, durch das gemeinsame Umformen von Prepreg und Metallträger einen besonders schnellen Verfahrensablauf mit geringer Zykluszeit zu Verfügung zu stellen. Außerdem bedarf es das erfindungsgemäße Verfahren im Vergleich mit anderen bekannten Verfahren zur Herstellung von Faserverbund-Halbzeugen oder -Bauteilen keiner aufwendigen und/oder komplex handhabbaren Anlagentechnik - was neben einer Reduzierung der Kosten für das erfindungsgemäße Verfahren auch eine Verbesserung seiner Reproduzierbarkeit bedeutet.

Im Allgemeinen wird erwähnt, dass der Metallträger aus Blechen mit einem Eisen-, Aluminium- oder Magnesiumwerkstoff, aus einem Leichtmetall oder dergleichen bzw. aus Legierungen aus diesen bestehen kann. Als Metallträger kann sich ein Stahlblech mit oder ohne Schutzschicht, beispielsweise auf Zinkbasis, auszeichnen. Im Allgemeinen wird weiter erwähnt, dass die duroplastische Kunststoffmatrix eine Kombination mit anorganischen oder organischen Verstärkungsfasern, wie z. B. Glas, Basalt, Kohlenstoff oder Aramid aufweisen kann. Zudem ist das Belegen des Metallträgers mit mehreren Prepregs nebeneinander als auch eine Stapelung von Prepregs (einlagig oder mehrlagig) auf dem Metallträger denkbar. Die im Prepreg enthaltenen Fasern können als reine unidirektionale Schicht vorliegen. Damit kann mit mehrlagigen Prepregs ein unidirektionales oder multidirektionales Laminat am Metallträger geschaffen werden.

Außerdem wird im Allgemeinen festgehalten, dass eine duroplastische Kunststoffmatrix auch modifizierte duroplastische Polymerblends aufweisen kann, welche vorzugsweise aus nicht zwangsweise miteinander vernetzten Phasen aus Epoxid- und Polyurethanphasen bestehen. Bekannte prozentuale Zusammensetzungen solch eines PU-Epoxy-Blends sind, beispielsweise 5 bis 25 Teile primärer Polyurethanphase in umgebender Epoxymatrix.

Im Allgemeinen wird weiter erwähnt, dass die Viskosität der Matrix mit einem Rheometer, nämlich Viskosimeter Anton Paar MCR 301 unter Oszillation (z.B.: Platte-Platte-Konfiguration, Durchmesser 25 mm; Spalt 1000µm; Amplitude 0,5%; Kreisfrequenz 10 rad/s), ausgewertet nach ASTM D 4473:08/2016 bestimmt wird.

Um die Gefahr eines unerwünschten Ausquetschens aus dem Prepreg der über dem Viskositätsminium erwärmten duroplastischen Matrix beim Umformen zu reduzieren, kann vorgesehen sein, dass vor dem Umformen der Vernetzungsgrad der duroplastischen Matrix auf 4 bis 15 % eingestellt wird (z.B.: durch Temperatur und/oder Zeit).

Besonders vorteilhaft kann sein, wenn beim Umformen der Vernetzungsgrad der duroplastischen Matrix auf 20 bis 45 % eingestellt wird (z.B.: durch Temperatur und/oder Zeit). Dadurch ist nämlich die Gefahr eines unerwünschten Ausquetschens der duroplastischen Matrix beim Umformen zusätzlich reduzierbar. Auch kann bei solch einem Vernetzungsgrad die Druckbelastung auf das Prepreg beim Umformen für optimale Bedingungen zur Erreichung einer erhöhten Laminatqualität des Prepregs sorgen. Zudem kann dies auch der Haftfestigkeit zwischen den Werkstoffpartnern dienlich sein.

Besonders vorteilhaft kann sein, wenn beim Umformen der Vernetzungsgrad der duroplastischen Matrix auf 25 bis 40 % eingestellt wird (z.B.: durch Temperatur und/oder Zeit).

Wird beim Umformen die duroplastische Matrix auf 120 bis 220°C erwärmt, kann die Vernetzung beschleunigt werden - womit das Umformen schneller erfolgen kann bzw. die Zykluszeit des Verfahrens verringert werden.

Besonders vorteilhaft kann sein, wenn beim Umformen die duroplastische Matrix auf 150 bis 180°C erwärmt wird.

Ein unerwünschtes Abkühlen des erwärmten Prepregs - und somit eine für das erfindungsgemäße Verfahren nachteilige Änderung der Temperatur - kann verhindert werden, wenn das Umformwerkzeug erwärmt und der Metallträger mit dem erwärmten Umformwerkzeug umgeformt wird. Auf diese Weise ist die Reproduzierbarkeit des Verfahrens weiter erhöhbar. Es wird festgehalten, dass zu diesem Zweck die Temperatur des Umformwerkzeugs von der Temperatur des Prepregs bzw. seiner Matrix abweichen kann. Vorstellbar ist weiter, dass die Werkzeuge des Umformwerkzeugs unterschiedliche Temperaturen aufweisen, um den Metallträger gezielt bereichsspezifisch zu temperieren oder einen Temperaturgradienten im Laminat einzustellen.

Die Zykluszeiten zum Umformen können reduziert werden, wenn das Prepreg nach dem gemeinsamen Umformen mit dem Metallträger drucklos gehärtet wird.

Dadurch, dass vor dem oder beim Belegen des Metallträgers mit dem Prepreg eine Zwischenschicht auf den Metallträger aufgebracht wird, über die das Prepreg an den Metallträger angebunden wird, kann einerseits die Haftfestigkeit verbessert, andererseits auch ausgleichend auf thermische Spannungen eingewirkt werden. Diese Zwischenschicht sollte zumindest in jenem Bereich des Metallträgers vollflächig aufgebracht werden, der auch mit Prepreg belegt wird.

Die Schichtdicke der Zwischenschicht kann bevorzugt von 50 µm bis 1000 µm betragen, bevorzugt sind Schichtdicken von 80 µm bis 700 µm. Dickere Schichten, bevorzugt Schichtdicken von 500 µm bis 1000 µm können sich dadurch auszeichnen, dass diese zudem einen Schutz vor Korrosion bieten (Sperrschicht). Bei Anwendungen mit hohen Steifigkeitsanforderungen sind dünne Filme bevorzugt (bevorzugt <150 µm). Des Weiteren ist die Verarbeitungszeit, d. h. die Reaktionszeit relevant - was vor allem bei kürzeren Zykluszeiten zu beachten ist. Hierbei hat sich gezeigt, dass Zwischenschichten auf Basis von Polyethylen, Polypropylen und/oder mit Polyamid-Kern oder auch Zwischenschichten auf Co-Polyamid-Basis besonders gut geeignet sein können. Dies können beispielsweise Systeme der Firma Nolax, nämlich Produkte Cox 391, Cox 422, Cox 435, Systeme der Firma Evonik, nämlich das Produkt Vestamelt X1333-P1 oder Systeme der Firma Hexcel, nämlich die Produkte TGA25.01A bzw. DLS 1857 sein.

Auch ist vorstellbar, diese Druckbelastung auf das Prepreg auszuüben, indem der als Spaltband ausgebildete Metallträger rollprofiliert wird. Solch ein Metallträger kann, beispielsweise durch Längsspalten eines Metallbands erzeugt, auch als flaches Spaltband ausgebildet sein, um ein Drapieren zu vermeiden.

Einer Falten- und/oder Blasenbildung am Prepreg, die sich im Zuge des Rollprofilierens ausbilden kann, kann erfolgreich entgegengewirkt werden, wenn nach dem Rollprofilieren des Metallträgers das Prepreg nochmals an den Metallträger angedrückt wird. Vorzugsweise erfolgt dieses Andrücken dem Rollprofilieren unmittelbar nach. Dies kann beispielsweise mithilfe von Rollenpaaren erfolgen.

Um das Rollprofilieren zu erleichtern, kann vorgesehen sein, dass der Metallträger bereichsweise mit mindestens einem Prepreg belegt wird. Dies kann die Reproduzierbarkeit des Verfahrens weiter erhöhen.

Vorstehende Vorteile können sich insbesondere dann einstellten, wenn 40 bis 70% einer der Flachseiten des Metallträgers mit Prepreg belegt sind.

Insbesondere kann sich das erfindungsgemäße Verfahren zur Herstellung eines Strukturbauteils eignen. Im Allgemeinen wird erwähnt, dass ein Strukturbauteil ein Bauteil mit einer tragenden Struktur sein kann. Das Strukturbauteil kann sich insbesondere für Fahrzeuge, insbesondere eines Kraftfahrzeugs, eines Straßenfahrzeugs, eines Transportfahrzeugs, eines Schienenfahrzeugs, eines Luftfahrzeugs oder eines Raumfahrzeugs eignen. Ein Strukturbauteil kann beispielsweise als ein Seitenschweller, als eine A-Säule, als eine B-Säule, als eine C-Säule, als ein Querträger oder als ein Längsträger ausgebildet sein.

### Kurze Beschreibung der Zeichnung

In den Figuren wird beispielsweise das erfindungsgemäße Verfahren zur Herstellung eines Halbzeugs oder Bauteils näher dargestellt. Es zeigen
- Fig. 1: ein Ablauf des erfindungsgemäßen Verfahrens, bei welchem ein Gerüst einer Walzprofilieranlage zum Umformen eines mit einem Prepreg verbundenen Metallträgers verwendet wird und
- Fig. 2: eine von der Zeit abhängige Darstellung zur Viskosität und dem Vernetzungsgrads der Matrix des im Verfahren nach Fig. 1 verwendeten Prepregs.

### Weg zur Ausführung der Erfindung

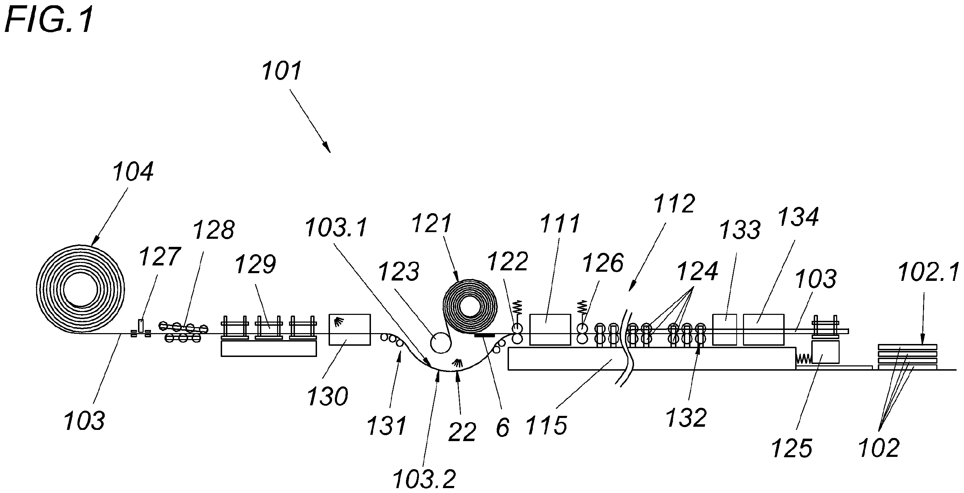

Gemäß dem nach Fig. 1 Ablauf zum erfindungsgemäßen Verfahren 101 sind zur Herstellung eines Bauteils 102 Gerüste 115 einer Walzprofilieranlage als Umformwerkzeug 112 dargestellt.

Ein auf einem Träger 121 vorgesehenes Prepreg 6, was hinsichtlich der Größen unverhältnismäßig dargestellt und bereits vorkonditioniert ist, wird auf einen als Spaltband 104 ausgeführten Metallträger 103 aufgebracht und zwar auf einer Flachseite 103.1 der beiden Flachseiten 103.1, 103,2. Der Metallträger 103 ist damit nur bereichsweise mit Prepreg 6 belegt. Das Spaltband 104 wird aus einem nicht näher dargestellten Coil durch Längsspalten/-teilen erzeugt.

Der Metallträger 103 wird samt Träger 121 und Prepreg 6 durch ein Andrückrollenpaar 122 geführt, wonach der Träger 121 am Metallträger 103 verbleibt. Das Prepreg 6 kann auf der oberen und/oder unteren Seite mit einer Schutzfolie 123 belegt sein. Vor dem Aufbringen des Prepregs 6 wird mindestens die Schutzfolie 123, auf der dem Träger 121 zugewandten Seite des Prepregs 6, abgezogen und aufgerollt. Nachfolgend wird der Metallträger 103 mit dem Prepreg 6 belegt.

Der sohin belegte Metallträger 103 wird anschließend durch einen Durchlaufofen 111 geführt - das Erwärmen führt zu einer Vorvernetzung der duroplastischen Matrix des Prepregs 6. Damit wird einen Vernetzungsgrad α vor dem Umformen von 4 bis 15 % eingestellt.

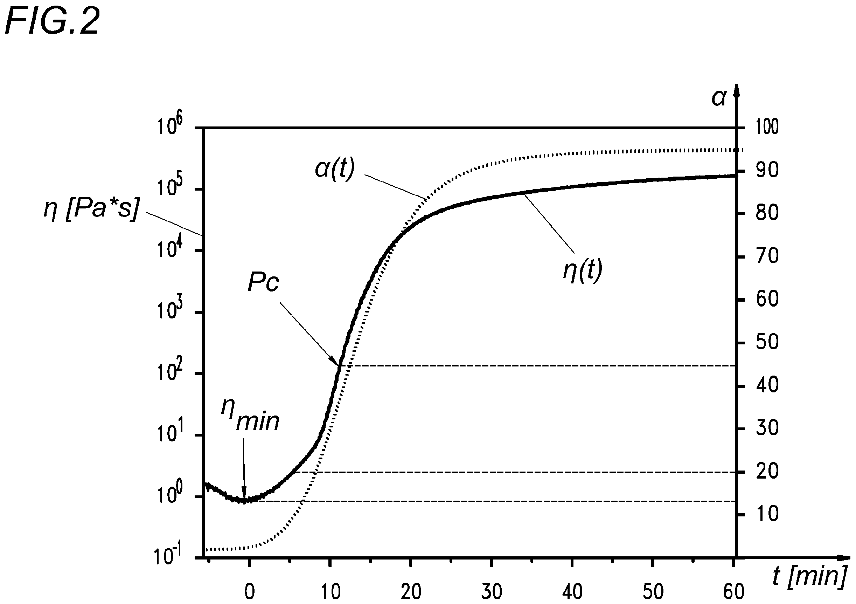

Erfindungsgemäß wird bei diesem Vorvernetzen die duroplastische Matrix in einen ihrem Viskositätsminimum ηₘᵢₙ nachfolgenden Viskositätszustand η übergeführt und das Prepreg 6 noch vor Erreichen des Gelierpunkts Pc seiner Matrix gemeinsam mit dem Metallträger 103 durch zusammenwirkende Rollen 124 der Gerüste 115 der Walzprofilieranlage umgeformt. Erfindungsgemäß erfolgt dieses Umformen in Abstimmung mit der Vorvernetzung der duroplastischen Matrix des Prepregs 6, wie dies der Fig. 2 zu entnehmen ist. Dadurch sind reproduzierbar mit Prepreg 6 belegte Halbzeuge oder Bauteile 102 mit einer kurzen Zykluszeit herstellbar.

Die vorteilhafte Mitumformung der duroplastischen Matrix mit dem Metallträger 103 ist erfindungsgemäß möglich, da das sich im beschriebenen, erfindungsgemäßen Zustand verwendete Prepreg 6 den plastischen Formänderungen durch das Umformen folgen kann. Die Endlosfasen des Prepregs 6 sind nämlich noch gegenüber dem Metallträger 103 relativ im Prepreg 6 beweglich. Die Matrix des Prepreg 6 befindet sich in einem ihrem Viskositätsminimum ηₘᵢₙ nachfolgenden Viskositätszustand η, wodurch ein Bruch der Endlosfasern bzw. eine Delamination der Faserverstärkung am Metallträger 103 beim Umformen nicht eintritt.

Die Darstellung nach Fig. 2 bezieht sich auf ein folgendes Faserverbundmaterial:

| | |
|---|---|
| Metallträger: | Stahlblech: Blechdicke 0,81 mm |
| Laminat: | unidirektional, vier Lagen von Prepreg |
| Prepreg: | Endlosfasern mit einem Faseranteil von 57% in der Matrix Dicke: 0,22 mm |
| Matrix: | duroplastische Basis (SGL Type E201: modifiziertes Epoxidharzsystem) |
| | ηₘᵢₙ = 0,9 Pa*s |
| | Pc = 45% |
| Zwischenschicht: | 100 µm Polypropylen |

Der Vernetzungsgrad α der Matrix wurde mittels Differential Scanning Calorimetry (DSC) gemessen nach ISO 11357-5:2013 bestimmt.

Anstatt des Stahlblechs ist auch ein Blech aus einer Aluminiumlegierung beispielsweise der 6xxx Reihe denkbar. Im Allgemeinen wird erwähnt, dass sich zur Messung der Vernetzung mittels Differential Scanning Calorimetry (DSC) besonders das isotherme Verfahren nach ISO 11357-5:2013 eignen kann.

Im vorzugsweise beheizten Umformwerkzeug 112 wird der Vernetzungsgrad α der Matrix ausgehend von 4 bis 15 % vor dem Umformen auf 20 bis 45 %, vorzugsweise auf 25 bis 40 %, beim Umformen eingestellt, welche Grenzen 20 bis 45 % strichliert der Fig. 2 eingezeichnet wurden. Solche ein Einstellten kann beispielsweise durch Temperatur und/oder Zeit erfolgen.

Mit einem vorzugsweise erwärmten Umformwerkzeug 112 kann zudem sichergestellt werden, dass beim Umformen die duroplastische Matrix auf einer Temperatur von 120 bis 220°C gehalten wird, um das Bauteil 102 dem Umformwerkzeug 112 durch schnellere Vernetzung früher entnehmen und das Verfahren so verkürzen zu können. Vielfach konnte sich eine Temperatur von 150 bis 180°C auszeichnen.

Der zu belegende Metallträger 103 kann unter anderem auch eine Schutzbeschichtung 21, beispielsweise eine Zink- oder Zinklegierungsschicht, aufweisen - wie diese nach Fig. 2 erkannt werden kann. Auf diese Schutzbeschichtung 21 bzw. auf die Flachseite 103.1 des Metallträgers 103 wird im mit Prepreg 6 vollflächig belegten Bereich eine Zwischenschicht 22 aufgebracht. Diese Zwischenschicht 22 wird durch Auftragen eines Polyamid-basierten Haftvermittlers auf den Metallträger 103 erzeugt, wie dies in Fig. 1 angedeutet ist. Über diese Zwischenschicht 22 kann das Prepreg 6 an den Metallträger 103 äußerst fest und spannungsarm angebunden werden.

Nach Fig. 1 ist weiter zu erkennen, das mit einer den Gerüsten 115 nachfolgenden fliegenden Trenneinrichtung 125 der umgeformte Metallträger 103 zu Bauteilen 102 abgelängt wird.

Diese abgelängten Bauteile 102 können noch einer weiteren drucklosen Vernetzung unterworfen werden, was nicht näher dargestellt ist. Besonders können sich die Bauteil 102 als Strukturbauteile 102.1 beispielsweise für Fahrzeuge eignen.

Nach dem Durchlaufofen 111, kann noch - zur Verbesserung der Laminatqualität am Prepreg 6 - ein Kompaktierungsrollenpaar 126 vorgesehen sein, welches das Prepreg 6 druckbelastet.

Die Walzprofilieranlage weist nach einer üblichen Bandvorbereitung, die mit Hilfe einer eine Bandschweißanlage 127 und einer Richtmaschine 128 durchgeführt wird, noch eine Vorlaufstanze 129 auf, mit welcher der Metallträger 103 gelocht und/oder verprägt wird. Anschließend fährt das Band in die Bandreinigung 130, wo vorzugsweise jene Flächen, die mit Prepregs 6 zu versehen sind, vorgereinigt werden. Nach der Schlingengrube 131 wird Prepreg 6, beispielsweise in Streifenform, aufgebracht. Zudem ist in der Fig. 1 zu erkennen, dass nach dem Umformen eine Kalibrierung 132 erfolgt und anschließen eine optionale Faltenglättung 133 durchgeführt wird. Diese Faltenglättung 133 kann beispielsweise mit Hilfe von gegenüberliegenden Rollen erfolgen, zwischen denen der rollprofilierte Metallträger 103 geführt, das Prepreg 6 nochmals an den Metallträger 103 andrücken. Anschließend kann die Vernetzung über eine weitere Wärmequelle 134 initiiert wird.

Wie in Fig. 1 zu erkennen wird der Metallträger 103 nur bereichsweise mit Prepreg 6 belegt, und zwar auf einer Flachseite 103.1 zu 40% bis 70%, was das gemeinsame Umformen deutlich erleichtert. Der mit Prepreg 6 belegte Bereich 14 der Flachseite 103.1 ist daher flächenmäßig kleiner als die gesamte Fläche der Flachseite 103.1.

## Patentansprüche

1. Verfahren zur Herstellung eines Halbzeugs oder Bauteils (102), bei dem
ein als Spaltband (104) ausgebildeter Metallträger (103) mit mindestens einem Prepreg (6), aufweisend eine thermisch vernetzbare, duroplastische Matrix mit Endlosfasern, belegt,
die duroplastische Matrix des Prepregs (6) durch Erwärmen vorvernetzt und der mit dem vorvernetzten Prepreg (6) belegte Metallträger (103) zu einem Halbzeug oder Bauteil (102) durch Rollprofilieren umgeformt wird,
wobei beim Vorvernetzen der duroplastischen Matrix des Prepregs (6) dessen Matrix in einen ihrem Viskositätsminimum (ηₘᵢₙ) nachfolgenden Viskositätszustand (η) übergeführt und noch vor Erreichen ihres Gelierpunkts (Pc) das Prepreg (6) gemeinsam mit dem Metallträger (103) umgeformt wird.

2. Verfahren nach Anspruch 1, **dadurch gekennzeichnet, dass** vor dem Umformen der Vernetzungsgrad (α) der duroplastischen Matrix auf 4 bis 15 % eingestellt wird.

3. Verfahren nach Anspruch 1 oder 2, **dadurch gekennzeichnet, dass** beim Umformen der Vernetzungsgrad (α) der duroplastischen Matrix auf 20 bis 45 % eingestellt wird.

4. Verfahren nach Anspruch 3, **dadurch gekennzeichnet, dass** beim Umformen der Vernetzungsgrad (α) der duroplastischen Matrix auf 25 bis 40 % eingestellt wird.

5. Verfahren nach einem der Ansprüche 1 bis 4, **dadurch gekennzeichnet, dass** beim Umformen die duroplastische Matrix auf 120 bis 220°C erwärmt wird.

6. Verfahren nach Anspruch 5, **dadurch gekennzeichnet, dass** beim Umformen die duroplastische Matrix auf 150 bis 180°C, erwärmt wird.

7. Verfahren nach einem der Ansprüche 1 bis 6, **dadurch gekennzeichnet, dass** das Umformwerkzeug (112) erwärmt und der Metallträger (103) mit dem erwärmten Umformwerkzeug (112) umgeformt wird.

8. Verfahren nach einem der Ansprüche 1 bis 7, **dadurch gekennzeichnet, dass** das Prepreg (6) nach dem gemeinsamen Umformen mit dem Metallträger (103) drucklos gehärtet wird.

9. Verfahren nach einem der Ansprüche 1 bis 8, **dadurch gekennzeichnet, dass** vor dem oder beim Belegen des Metallträgers (103) mit dem Prepreg (6) eine Zwischenschicht (22) auf den Metallträger (103) aufgebracht wird, über die das Prepreg (6) an den Metallträger (103) angebunden wird.

10. Verfahren nach einem der Ansprüche 1 bis 9, **dadurch gekennzeichnet, dass** nach dem Rollprofilieren des Metallträgers (103) das Prepreg (6) nochmals an den Metallträger (103) angedrückt wird.

11. Verfahren nach einem der Ansprüche 1 bis 10, **dadurch gekennzeichnet, dass** der Metallträger (103) bereichsweise mit mindestens einem Prepreg (6) belegt wird.

12. Verfahren nach Anspruch 11, **dadurch gekennzeichnet, dass** 40 bis 70% einer der Flachseiten (103.1, 103.2) des Metallträgers (103) mit Prepreg (6) belegt sind.

13. Verfahren nach einem der Ansprüche 1 bis 12 zur Herstellung eines Strukturbauteils (102.1).

## Claims

1. A method for manufacturing a semifinished product or component (102), in which
a metal support (103) embodied as a split strip (104) is covered with at least one prepreg (6) containing a thermally cross-linkable thermosetting matrix with endless fibers,
the thermosetting matrix of the prepreg (6) is pre-cross-linked by heating, and the metal support (103) covered with the pre-cross-linked prepreg (6) is formed into a semifinished product or component (102) by means of roll forming,
wherein
during the pre-cross-linking of the thermosetting matrix of the prepreg (6), its matrix is transferred into a viscosity state (η) that is higher than its minimum viscosity (ηₘᵢₙ) and prior to reaching its gel point, the prepreg (6) is formed together with the metal support (103).

2. The method according to claim 1, **characterized in that** before the forming, the degree of cross-linking (α) of the thermosetting matrix is set to 4 to 15%.

3. The method according to claim 1 or 2, **characterized in that** during the forming, the degree of cross-linking (α) of the thermosetting matrix is set to 20 to 45%.

4. The method according to claim 3, **characterized in that** during the forming, the degree of cross-linking (α) of the thermosetting matrix is set to 25 to 40%.

5. The method according to one of claims 1 through 4, **characterized in that** during the forming, the thermosetting matrix is heated to 120 to 220°C.

6. The method according to claim 5, **characterized in that** during the forming, the thermosetting matrix is heated to 150 to 180°C.

7. The method according to one of claims 1 through 6, **characterized in that** the forming tool (112) is heated and the metal support (103) is formed by the heated forming tool (112).

8. The method according to one of claims 1 through 7, **characterized in that** after the combined forming, the prepreg (6) undergoes unpressurized curing together with the metal support (103).

9. The method according to one of claims 1 through 8, **characterized in that** before or during the covering of the metal support (103) with the prepreg (6), an intermediate layer (22) is applied to the metal support (103), which bonds the prepreg (6) to the metal support (103).

10. The method according to one of claims 1 through 9, **characterized in that** after the roll forming of the metal support (103), the prepreg (6) is once again pressed against the metal support (103).

11. The method according to one of claims 1 through 10, **characterized in that** the metal support (103) is covered in some regions with at least one prepreg (6).

12. The method according to claim 11, **characterized in that** 40 to 70% of one of the flat sides (103.1, 103.2) of the metal support (103) is covered with prepreg (6).

13. The method according to one of claims 1 through 12 for manufacturing a structural component (102.1).

## Revendications

1. Procédé de fabrication d'un produit semi-fini ou d'un composant (102), dans lequel un support métallique (103) sous la forme d'une bande fendue (104) est revêtu d'au moins un préimprégné (6) ayant une matrice thermodurcissable thermoréticulable à fibres continues, la matrice thermodurcissable du préimprégné (6) est préréticulée par chauffage et le support métallique (103) revêtu avec le préimprégné réticulé (6) est formé par laminage en un demi-produit ou composant (102), dans laquelle, pendant la préréticulation de la matrice thermodurcissable du préimprégné (6), sa matrice est convertie en un état de viscosité (η) après son minimum de viscosité (ηₘᵢₙ) et le préimprégné (6) est formé avec le support métallique (103) avant que son point de gélification (Pc) soit atteint.

2. Procédé selon la revendication 1, **caractérisé en ce que**, préalablement à la Umform, le degré de réticulation (α) de la matrice thermodurcissable est ajusté à 4 à 15%.

3. Procédé selon la revendication 1 ou 2, **caractérisé en ce que** lors de la conversion du degré de réticulation (α) de la matrice thermodurcissable est ajusté à 20 à 45%.

4. Procédé selon la revendication 3, **caractérisé en ce que** lors de la conversion du degré de réticulation (α) de la matrice thermodurcissable est ajusté à 25 à 40%.

5. Procédé selon l'une des revendications 1 à 4, **caractérisé en ce que** la matrice thermodurcissable est chauffée entre 120 et 220 ° C pendant le formage.

6. Procédé selon la revendication 5, **caractérisé en ce que** lors du thermoformage, la matrice thermodurcissable à une température de 150 à 180 ° C est chauffée.

7. Procédé selon l'une des revendications 1 à 6, **caractérisé en ce que** l'outil de formage (112) est chauffé et le support métallique (103) avec l'outil de formage chauffé (112) est formé.

8. Procédé selon l'une des revendications 1 à 7, **caractérisé en ce que** le préimprégné (6) est polymérisé sans pression après la formation commune avec le support métallique (103).

9. Procédé selon l'une des revendications 1 à 8, **caractérisé en ce que**, avant ou pendant l'occupation du support métallique (103) avec le préimprégné (6), une couche intermédiaire (22) est appliquée sur le support métallique (103), par l'intermédiaire de laquelle le préimprégné (6) est relié au support métallique (103).

10. Procédé selon l'une des revendications 1 à 9, **caractérisé en ce que** le préimprégné (6) est de nouveau pressé contre le support en métal (103) après le profilage du rouleau (103).

11. Procédé selon l'une des revendications 1 à 10, **caractérisé en ce que** le support métallique (103) est partiellement recouvert d'au moins un préimprégné (6).

12. Procédé selon la revendication 11, **caractérisé en ce que** 40 à 70% d'un des côtés plats (103.1, 103.2) du support métallique (103) sont recouverts de préimprégné (6).

13. Procédé selon l'une des revendications 1 à 12 pour la fabrication d'un composant structurel (102.1).
